(19) Europäisches Patentamt / European Patent Office / Office européen des brevets

(11) **EP 2 081 278 A2**

(12) **EUROPÄISCHE PATENTANMELDUNG**

(43) Veröffentlichungstag:
**22.07.2009 Patentblatt 2009/30**

(51) Int Cl.:
***H02K 3/40*** *(2006.01)*

(21) Anmeldenummer: **08172762.0**

(22) Anmeldetag: **23.12.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **17.01.2008 DE 102008000073**

(71) Anmelder: **Alstom Technology Ltd**
**5400 Baden (CH)**

(72) Erfinder: **Baumann, Thomas**
**5430, Wettingen (CH)**

(54) **Leiterstab für eine rotierende elektrische Maschine**

(57)  Ein Leiterstab für eine rotierende elektrische Maschine weist einen Innenleiter (11) mit im wesentlichen rechteckigem Querschnitt auf, der in einem geraden Abschnitt des Leiterstabes von einer Glimmerbandisolation umhüllt ist.

Eine Herabsetzung der Durchschlagswahrscheinlichkeit an der Längskante wird dadurch erreicht, dass der Innenleiter (11) mit wenigstens einem ersten Glimmerband (15) umwickelt ist, und dass benachbarte parallele Kanten (16) des um den Innenleiter (11) gewickelten ersten Glimmerbandes (15) eine Überlappung (OL) aufweisen, die wesentlich kleiner als die Hälfte der Breite des ersten Glimmerbandes (15) ist.

Fig.5

**Beschreibung**

TECHNISCHES GEBIET

Die vorliegende Erfindung bezieht sich auf das Gebiet der rotierenden elektrischen Maschinen. Sie betrifft einen Leiterstab gemäss dem Oberbegriff des Anspruchs 1.

STAND DER TECHNIK

Bei grossen rotierenden elektrischen Maschinen werden im Bereich des Stators und/oder Rotors Wicklungen eingesetzt, die aus einzelnen Leiterstäben zusammengesetzt sind. Die Leiterstäbe, die üblicherweise einen rechteckigen Querschnitt aufweisen, sind mit einem geraden Teil in entsprechende axiale Nuten des Stator- oder Rotorkörpers eingelegt und an den aus dem Körper herausragenden Enden in einem Wickelkopf untereinander verbunden (EP-A2-1 653 588). Die Leiterstäbe haben beispielsweise den in Fig. 1 dargestellten Aufbau: Der Leiterstab 10 hat einen elektrisch leitenden Innenleiter 11 aus Kupfer, der meist aus einer Vielzahl von Teilleitern 12 zusammengesetzt ist. Der Innenleiter 11 ist von einer Isolation 14 umgeben, deren erster und innerster Abschnitt zur Vermeidung von Entladungen als Glimmerisolation 13 ausgebildet ist. Eine wichtige Rolle bei der Durchschlagsfestigkeit spielen die Längskanten 25 des Innenleiters, die durch einen Kantenradius $r_i$ charakterisiert sind.

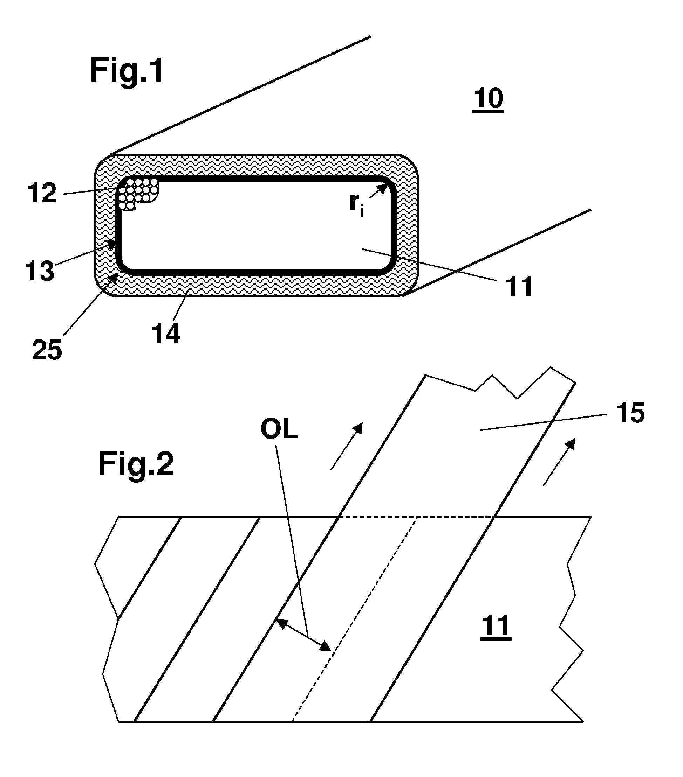

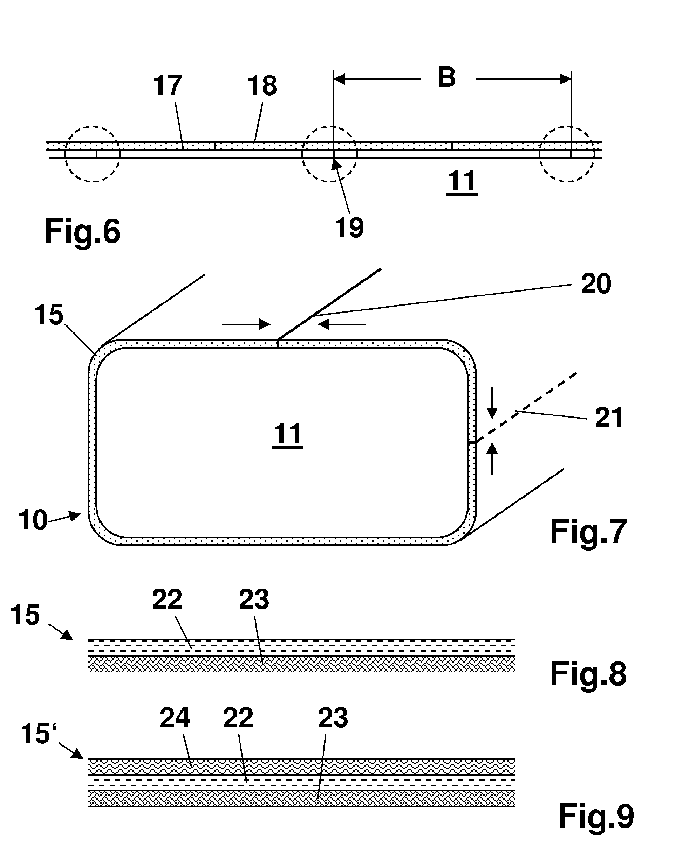

Die Glas/Glimmerisolation 13 wird gemäss Fig. 2 in Form von Glimmerbändern 15 in mehreren Lagen spiralig auf den Innenleiter 11 mit ca. 50% Überlappung OL (von Hand oder maschinell) aufgewickelt. Die maximale Bandbreite (B in Fig. 6) wird bestimmt durch den stärksten Kantenradius. Gebräuchlich sind Bandbreiten von 15 bis 30 mm.

Untersuchungen an Leiterstäben, welche bei elektrischen Dauertests durchgeschlagen sind, zeigen in der Mehrzahl der Fälle, dass

1. der Durchschlag im Nutteil (also dem graden Teil des Generatorstabes) auftritt;

2. der Durchschlag auf der Längskante auftritt (25 in Fig. 1);

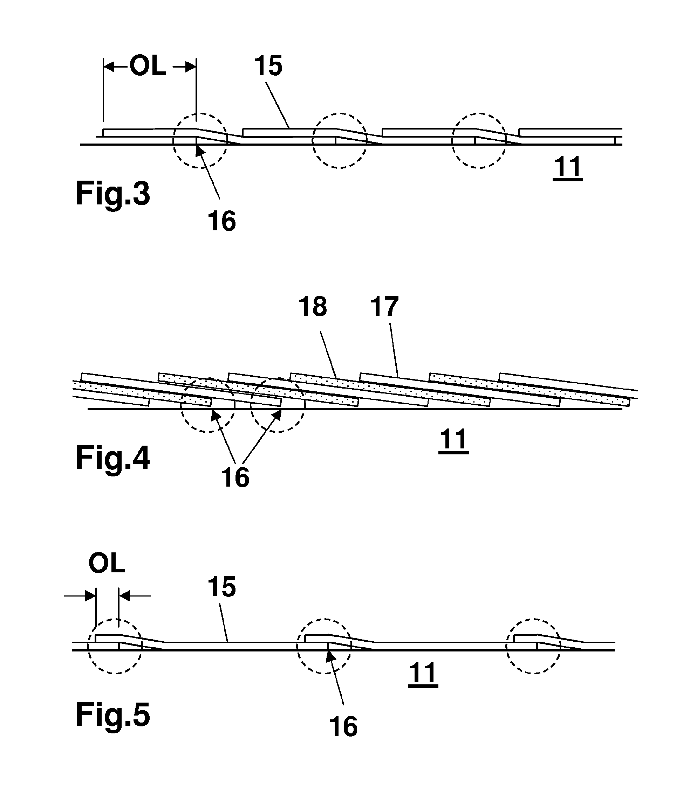

3. der Durchschlag in der ersten Glimmerbandlage (also direkt auf dem Innenleiter 11) an der Kante des Bandes (16 in Fig. 3) auftritt.

Zu Punkt 2: Das Auftreten auf der Längskante 25 ist dadurch zu verstehen, dass hier die Feldstärke deutlich überhöht ist; näherungsweise ist die Feldstärke genau oberhalb des Cu:

$$E_{\max} = \frac{U}{\sqrt{3} \cdot r_i \cdot \ln\left[(d + r_i)/r_i\right]}.$$

Hierbei ist U die anliegende Spannung, $r_i$ der Radius des Innenleiters 11 und die die Dicke der gesamten Isolation 14. Der "natürliche" Kantenradius ist gegeben durch den Radius der Teilleiter 12, aus denen der Innenleiter 11 aufgebaut ist. (üblicherweise beträgt dieser Radius 0,5 mm).

Der Feldüberhöhungseffekt kann durch Verrunden (z.B. durch Schleifen) des Innenleiters 11 gemildert werden. Mehr als $r_i$ = 2,5 mm kann aber kaum erreicht werden, da eine grössere Verrundung nicht ohne ein Anschleifen der Teilleiter 12 (und somit einer Verengung des Strompfades) erreicht werden kann.

Zu Punkt 3: Die Kante 16 der ersten Glimmerbandlage 15 stellt eine dielektrische Diskontinuität da (siehe die gestrichelt umrandeten Bereiche in Fig. 3). Dieser Kantenbereich ist entweder von Reinharz (mit anderer Permeabilität als die des Glimmerbandes 15) oder gar nicht ausgefüllt (also ein Hohlraum). Üblicherweise werden gemäss Fig. 4 zwei Glimmerbänder 17 und 18 mit 1/4 Bandbreite Versatz und halber Überlappung OL gewickelt, sodass bei einer Bandbreite von 25 mm alle 6,25 mm eine derartige Diskontinuität entsteht.

DARSTELLUNG DER ERFINDUNG

Es ist daher Aufgabe der Erfindung, einen Leiterstab zu schaffen, bei dem die Durchschlagswahrscheinlichkeit an der Kante herabgesetzt ist.

Die Aufgabe wird durch die Gesamtheit der Merkmale des Anspruchs 1 gelöst. Wesentlich für die Erfindung ist, dass der Innenleiter mit wenigstens einem ersten Glimmerband umwickelt ist, und dass benachbarte parallele Kanten des um den Innenleiter gewickelten ersten Glimmerbandes eine Überlappung aufweisen, die wesentlich kleiner als die Hälfte der Breite des ersten Glimmerbandes ist. Erfindungsgemäss wird also vorgeschlagen, die dielektrische Diskontinuität an der Kante des Leiterstabes bzw. Innenleiters dadurch zu verringern bzw. zu beseitigen, dass Bandkanten in der ersten (oder ersten und zweiten) Glimmerbandlage wesentlich seltener auftreten als bei den Leiterstäben nach dem Stand der Technik.

Eine Ausgestaltung der Erfindung ist dadurch gekennzeichnet, dass das erste Glimmerband helixförmig um die Längsachse des Leiterstabes herumgewickelt ist. Vorzugsweise ist dabei die Breite des ersten Glimmerbandes grösser als 50 mm und beträgt insbesondere etwa 100 mm.

Eine andere Ausgestaltung der Erfindung zeichnet sich dadurch aus, dass das erste Glimmerband mit seiner Längsachse parallel zur Längsachse des Leiterstabes um den Leiterstab herumgewickelt ist. Dabei ist vorzugsweise das erste Glimmerband mit seiner Längsachse so um den Leiterstab herumgewickelt, dass die Kanten des ersten Glimmerbandes in den Seitenflächen des Leiterstabes liegen.

Besonders vorteilhaft ist dabei, wenn die Breite des ersten Glimmerbandes im Wesentlichen gleich dem Aussenumfang des Innenleiters ist, so dass die parallelen Kanten des ersten Glimmerbandes einen in Längsrichtung verlaufenden Stoss bilden.

Eine weitere Ausgestaltung der Erfindung ist dadurch gekennzeichnet, dass das erste Glimmerband mit einer verschwindenden Überlappung gewickelt wird, so dass die benachbarten parallelen Kanten des ersten Glimmerbandes einen Stoss bilden.

Zusätzlich kann das erste Glimmerband auf der Unterseite elektrisch schwach leitend ausgebildet sein. Dies kann insbesondere dadurch erreicht werden, dass das erste Glimmerband eine Glimmerschicht aufweist, die auf der Unterseite mit Graphit oder Russ beschichtet ist.

Es ist aber auch denkbar, dass das erste Glimmerband eine Glimmerschicht aufweist, die auf einer elektrisch leitenden Gewebeschicht aufgebracht ist, wobei die elektrisch leitende Gewebeschicht insbesondere ein Kohlefasergewebe oder ein elektrisch leitfähiges Polyestervlies umfassen kann.

Zusätzlich kann auf die Glimmerschicht ein Glasfasergewebe aufgebracht sein.

Wird das erste Glimmerband mit der Längsachse parallel zur Längsachse des Leiterstabes aufgebracht, ist es von Vorteil, wenn es mit einer klebenden Substanz auf dem Innenleiter fixiert ist. Die klebende Substanz ist dabei insbesondere ein Tränkharz oder ein Silikon-Elastomer.

## KURZE ERLÄUTERUNG DER FIGUREN

Die Erfindung soll nachfolgend anhand von Ausführungsbeispielen im Zusammenhang mit den Zeichnungen näher erläutert werden. Es zeigen

Fig. 1 den Schnitt durch einen Leiterstab, wie er der Erfindung zugrunde liegt;

Fig. 2 eine herkömmliches Wickelschema für das erste Glimmerband mit einer Überlappung halber Breite;

Fig. 3 die Problemzonen bei der stark überlappenden Umwicklung;

Fig. 4 die Problemzonen bei der gleichzeitigen Umwicklung mit zwei versetzten Bändern;

Fig. 5 die helixförmige Umwicklung mit dem ersten Glimmerband mit geringer Überlappung gemäss einem Ausführungsbeispiel der Erfindung;

Fig. 6 die helixförmige Umwicklung ohne Überlappung auf Stoss gemäss einem anderen Ausführungsbeispiel der Erfindung;

Fig. 7 die Umwicklung auf Stoss mit der Längsrichtung des Bandes parallel zur Längsrichtung des Leiterstabes gemäss einem weiteren Ausführungsbeispiel der Erfindung;

Fig. 8 einen möglichen zweischichtigen Aufbau des bei der Erfindung verwendeten Glimmerbandes; und

Fig. 9 einen möglichen dreischichtigen Aufbau des bei der Erfindung verwendeten Glimmerbandes.

## WEGE ZUR AUSFÜHRUNG DER ERFINDUNG

Im ersten Ausführungsbeispiel der Erfindung wird eine Herabsetzung der Durchschlagswahrscheinlichkeit an der Längskante 25 des Innenleiters 11 dadurch erreicht, dass ein Glimmerband üblicher Breite nur einlagig mit gegenüber der herkömmlichen Wickeltechnik reduzierter Überlappung OL gewickelt ist (Fig. 5). Dadurch wird die Häufigkeit der Kanten 16 pro Längeneinheit des Leiterstabes in Längsrichtung deutlich herabgesetzt.

Im Grenzfall der Überlappung 0 (Fig.6), das heisst der Wicklung auf Stoss 19, ist die Häufigkeit der Kante um den Faktor 4 verringert gegenüber dem Stand der Technik. Bei dieser bevorzugten Ausführungsform der gestossenen Wicklung wird der Stoss 19 im ersten Glimmerband 17 durch eine zweite, ebenfalls gestossene Lage eines Glimmerbandes 18 abgedeckt. Diese Art der Wicklung sollte beschränkt sein auf den geraden Teil des Leiterstabes 10 (der in der Wicklungsnut liegt), da es nicht möglich ist, im gebogenen Bereich des Stabes gestossen zu wickeln. In einer besonders bevorzugten Ausführung ist hierzu ein Band von wesentlich grösserer Breite B, insbesondere von mehr als 50 mm, z.B. 100 mm, zu benutzen.

Eine zweite Ausführungsform, mit der Bandkanten auf der Stabkante 25 völlig vermieden werden können, besteht darin, als erste Lage eine Bahn der Länge des geraden Teils und der Breite des Kupferstab- bzw. Innenleiterumfangs stossend aufzubringen (Fig. 7). Der Stoss 20, 21 des Glimmerbandes 15 verläuft dann in axialer Richtung des Leiterstabes 10 in Bereich der Mitte der Schmal- oder Breitseite des Stabes, also weit weg von der Stabkante. Damit dieses Glimmerband auf dem Stab verbleibt, muss es aufgeklebt werden, z.B. mit Tränkharz oder einem Silikon-Elastomer. Im letzteren Fall besteht ein zusätzlicher Vorteil darin, dass die Verbindung zwischen Innenleiter 11 und Isolierhülse (Hauptisolation 14) elastisch ist. Dadurch kann sie Scherspannungen, erzeugt durch die Differenz im thermischen Ausdehnungskoeffizienten zwischen Cu und Hauptisolation 14, in Dehnung umwandeln, ohne dass es zum Riss der Verklebung kommt.

Ein solches Glimmerband kann in einer bevorzugten Ausführung so aufgebaut sein, dass es auf seiner Unterseite schwach leitfähig ist. Dies kann durch eine Graphit- oder Russbeschichtung erreicht werden. Es ist aber auch denkbar (Fig. 8), dass der Glimmer (Glimmerschicht 22) kaschiert ist auf eine elektrisch leitende Gewebeschicht 23, insbesondere ein Kohlefasergewebe oder ein leitfähiges Polyestervlies. Das Glimmerband 15 ist dann ein 2-Schicht-Material (z.B. C-Faser-Gewebe/ Glimmer).

Das Glimmerband 15' kann gemäss Fig. 9 aber auch ein 3-Schicht-Material (z.B. C-Faser-Gewebe/ Glimmer/Glasfasergewebe) sein, bei dem über der Glimmerschicht 22 noch ein Glasfasergewebe 24 aufgebracht ist. Die leitfähige Schicht 23 dient dann als vollständiger Innenglimmschutz, welcher in engem und dauerhaftem Kontakt mit der Hauptisolation 14 ist.

BEZUGSZEICHENLISTE

| | |
|---|---|
| 10 | Leiterstab |
| 11 | Innenleiter |
| 12 | Teilleiter |
| 13 | Glimmerisolation |
| 14 | Hauptisolation |
| 15,15' | Glimmerband |
| 16 | Kante |
| 17,18 | Glimmerband |
| 19 | Stoss |
| 20,21 | Stoss |
| 22 | Glimmerschicht |
| 23 | Gewebeschicht (elektrisch leitfähig) |
| 24 | Glasfasergewebe |
| 25 | Längskante |
| B | Breite (Glimmerband) |
| OL | Überlappung |

**Patentansprüche**

1. Leiterstab (10) für eine rotierende elektrische Maschine, welcher Leiterstab (10) einen Innenleiter (11) mit im wesentlichen rechteckigem Querschnitt aufweist, der in einem geraden Abschnitt des Leiterstabes (10) von einer Glimmerbandisolation (13) umhüllt ist, **dadurch gekennzeichnet, dass** der Innenleiter (11) mit wenigstens einem ersten Glimmerband (15, 15', 17) umwickelt ist, und dass benachbarte parallele Kanten des um den Innenleiter (11) gewickelten ersten Glimmerbandes (15, 15', 17) eine Überlappung (OL) aufweisen, die wesentlich kleiner als die Hälfte der Breite (B) des ersten Glimmerbandes (15, 15', 17) ist.

2. Leiterstab nach Anspruch 1, **dadurch gekennzeichnet, dass** das erste Glimmerband (15, 15', 17) helixförmig um die Längsachse des Leiterstabes (10) herumgewickelt ist.

3. Leiterstab nach Anspruch 1 oder 2, **dadurch gekennzeichnet, dass** die Breite (B) des ersten Glimmerbandes (15, 15', 17) grösser als 50 mm, insbesondere etwa 100 mm, ist.

4. Leiterstab nach Anspruch 1, **dadurch gekennzeichnet, dass** das erste Glimmerband (15, 15', 17) mit seiner Längsachse parallel zur Längsachse des Leiterstabes (10) um den Leiterstab (10) herumgewickelt ist.

5. Leiterstab nach Anspruch 4, **dadurch gekennzeichnet, dass** das erste Glimmerband (15, 15', 17) mit seiner Längsachse so um den Leiterstab (10) herumgewickelt ist, dass die Kanten (20, 21) des ersten Glimmerbandes (15, 15', 17) in den Seitenflächen des Leiterstabes (10) liegen.

6. Leiterstab nach Anspruch 4 oder 5, **dadurch gekennzeichnet, dass** die Breite (B) des ersten Glimmerbandes im Wesentlichen gleich dem Aussenumfang des Innenleiters (11) ist, so dass die parallelen Kanten des ersten Glimmerbandes (15, 15', 17) einen Stoss (20, 21) bilden.

7. Leiterstab nach einem der Ansprüche 1 bis 3, **dadurch gekennzeichnet, dass** das erste Glimmerband (15, 15', 17) mit einer verschwindenden Überlappung (OL) gewickelt wird, so dass die benachbarten parallelen Kanten des ersten Glimmerbandes (15, 15', 17) einen Stoss (19) bilden.

8. Leiterstab nach einem der Ansprüche 1 bis 7, **dadurch gekennzeichnet, dass** das erste Glimmerband (15, 15', 17) auf der Unterseite elektrisch schwach leitend ausgebildet ist.

9. Leiterstab nach Anspruch 8, **dadurch gekennzeichnet, dass** das erste Glimmerband eine Glimmerschicht (22) aufweist, die auf der Unterseite mit Graphit oder Russ beschichtet ist.

10. Leiterstab nach Anspruch 8, **dadurch gekennzeichnet, dass** das erste Glimmerband eine Glimmerschicht (22) aufweist, die auf einer elektrisch leitenden Gewebeschicht (23) aufgebracht ist.

11. Leiterstab nach Anspruch 10, **dadurch gekennzeichnet, dass** die elektrisch leitende Gewebeschicht (23) ein Kohlefasergewebe oder ein elektrisch leitfähiges Polyestervlies umfasst.

12. Leiterstab nach Anspruch 10 oder 11, **dadurch gekennzeichnet, dass** auf die Glimmerschicht (22) ein Glasfasergewebe (24) aufgebracht ist.

13. Leiterstab nach einem der Ansprüche 4 bis 6, **dadurch gekennzeichnet, dass** das erste Glimmerband (15, 15', 17) mit einer klebenden Substanz auf dem Innenleiter (11) fixiert ist.

14. Leiterstab nach Anspruch 13, **dadurch gekennzeichnet, dass** die klebende Substanz ein Tränkharz oder ein Silikon-Elastomer ist.

## Fig.1

<u>10</u>

12

$r_i$

13

11

25

14

OL

15

## Fig.2

<u>11</u>

OL

15

**Fig.3**

16

11

18    17

16

11

**Fig.4**

OL

15

16

11

**Fig.5**

Fig.6

Fig.7

Fig.8

Fig.9

**EP 2 081 278 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1653588 A2